# EUROPÄISCHE PATENTSCHRIFT

(11) **EP 1 761 321 B1**
(45) Veröffentlichungstag und Bekanntmachung des Hinweises auf die Patenterteilung: **06.08.2008**
(21) Anmeldenummer: 05772009.6
(22) Anmeldetag: 29.06.2005
(51) Int. Cl.: B01D 35/30, F16J 13/02, F16J 13/10

(54) **GEHÄUSEVERSCHLUSS FÜR FILTER**
HOUSING CLOSURE FOR A FILTER
SYSTEME DE FERMETURE DE CARTER DE FILTRE

(30) Priorität: 30.06.2004 DE 102004031608
(43) Veröffentlichungstag der Anmeldung: 14.03.2007
(73) Patentinhaber: MANN + HUMMEL GMBH, D-71638 Ludwigsburg (DE)
(72) Erfinder: BAUDER, Ralf, 68775 Ketsch (DE)
(74) Vertreter: Voth, Gerhard
(86) Internationale Anmeldenummer: PCT/EP2005/053058
(87) Internationale Veröffentlichungsnummer: WO 2006/003160

(56) Entgegenhaltungen:
- WO-A-03/070352
- WO-A-20/04041037
- DE-A1- 3 327 439
- US-A- 5 678 721
- US-A1- 2003 006 180
- US-A1- 2003 226 798

## Beschreibung

### Stand der Technik

Die Erfindung betrifft ein durch einen Deckel verschließbares Filtergehäuse gemäß dem Oberbegriff des Patentanspruches 1. Außerdem betrifft die Erfindung ein Verfahren zur Anwendung der oben genannten Erfindung.

Aus dem Stand der Technik sind vielerlei Ausgestaltungsformen für derartige Gehäuseverschlüsse bekannt. Stellvertretend hierfür ist in der DE 19 546 440 A1 ein Filtergehäuse gezeigt, in welchem ein Filterelement aufgenommen ist, wobei das Filtergehäuse durch einen Deckel dichtend verschlossen ist. Am Deckel wird auf der Gehäuseseite durch einen Absatz ein Ringbund gebildet, welches mit der zylindrischen Öffnung des Gehäuses kommuniziert. Am Randbereich des Deckels wird dieser durch Schrauben an das Gehäuse gespannt und fixiert. Nachteilig an dieser Lösung ist, dass die Herstellung der Innengewinde im Gehäuse und der Schraublöcher im Deckel einen hohen Fertigungsaufwand verursacht. Weiterhin sind zusätzliche Schrauben notwendig, die lose Teile darstellen und bei Montagearbeiten verlierbar sind, oder auch in das Gehäuseinnere fallen können. Die Montage für die Schraubverbindung ist insbesondere deshalb aufwendig, da derartige Gehäuseverschlüsse oft an schwer zugänglichen Stellen angebracht sind. An diesen schwer zugänglichen Stellen muss deshalb extra ein Raum für die Montage des Deckels bereitgehalten werden.

Die US 2003/226798 A1 zeigt einen Behälter, der mit einem Deckel verschlossen wird, der mit einem mehrteiligen Schnappverschluss auf den Behälter gedrückt wird. Der Schnappverschluss besteht aus zwei Bügeln, die mit einem Drehgelenk miteinander verbunden sind. Einen Handgriff beinhaltet das beschriebene System nicht.

Die Schrift WO 2004/041037 A offenbart ein Verschlusssystem für einen Behälter mit einem Deckel. Am Umfang verteilte U-förmige Verschlussklammern halten den Deckelrand auf dem Behälterrand fest. Zum Lösen des Verschlusses werden die Verschlussklammern über ein zusätzliches Betätigungselement radial nach außen verschoben. Dieses zusätzliche Element kann ein Drehknopf oder ein Schwenkbügel sein, wobei die Drehbewegung des Betätigungselementes über die Gestaltung der Verschlussklammern und des Betätigungselement eine translatorische Bewegung der Verschlussklammern bewirkt.

Ein ähnlicher Verschluss für einen Druckbehälter ist in der US-A-5 678 721 beschrieben. Am Deckel sind verschiebbare Verschlusselemente angeordnet, die mit zusätzlichen Verstellelementen radial nach außen bewegt werden. Als Betätigung zur Ver- und Entriegelung des Deckels wirkt ein senkrecht zur Deckelstirnseite drehbar gelagerter Griff, der in ein Betätigungsgestänge greift, welches die Verschlusselemente auseinander schiebt.

Einen Mechanismus zum Verschließen eines Wasseraufbereitungssystems wird in der US 2003/006180 A1 beschrieben. Zwei Hälften eines Verschlusses eines Behälters sind in entgegengesetzter Richtung parallel zur Stirnseite des Deckels verschiebbar angeordnet. Ein zusätzliches an einer Schwenkachse parallel zur Stirnfläche des Deckels rotatorisch gelagertes Befestigungsmittel bildet einen Handgriff und bewirkt beim Ausklappen des Handgriffs durch eine seitliche Kulissenführung am Befestigungsmittel, dass die Verschlusshälften auseinander bewegt werden und der Verschluss entriegelt wird.

Ein Verschlusssystem für einen Druckkochtopf offenbart die DE 33 27 439 A1. An dem Deckel für den Druckkochtopf ist eine Verriegelungseinrichtung, bestehend aus mehreren Teilen angeordnet, welches durch die Schwenkbewegung eines Hebels um eine Schwenkachse senkrecht zur Deckelstimfläche geöffnet und verriegelt wird. Eine Kulisse in dem Schwenkhebel bewirkt während der Schwenkbewegung eine Verschiebung der Halteelemente in radialer Richtung.

In der WO 03/070352 A wird ein Verschlusssystem für einen Wasserbehälter vorgestellt, der einen aus der Stirnseite des Deckels ausschwenkbaren Griff aufweist. Zur Befestigung des Deckels auf dem Behälter wird ein Schraub- oder Bajonettverschluss vorgeschlagen. Die Funktionen "Handgriff" und "Befestigung des Deckels" werden unabhängig voneinander von verschieden Bauteilen bewerkstelligt.

Die Aufgabe der vorliegenden Erfindung besteht darin, eine Gehäuseverbindung für ein Filtergehäuse zu schaffen, welche wenig Raum in Anspruch nimmt, einen einfachen Montageablauf gewährleistet, an schwer zugänglichen Stellen verwendbar ist und ohne Werkzeuge montiert werden kann.
Diese Aufgabe wird durch die Merkmale der Patentansprüche 1 und 9 gelöst.

### Vorteile der Erfindung

Der erfindungsgemäße Gehäuseverschluss eines Filtergehäuses weist einen Deckel auf, der eine Stirnseite des Gehäuses vollständig überdeckt, wobei an diesem Deckel zur Stirnseite des Filtergehäuses hin Konturen angeordnet sind, die mit der Stirnseite des Gehäuses kommunizieren und dadurch eine dichte Verbindung herstellen. Diese Konturen können konisch oder zylindrisch geformt sein.

Üblicherweise ist die Dichtfläche des Deckels als ein zylindrischer Absatz angeordnet, der mit zylindrischen Umfangsflächen der Stirnseite des Gehäuses kommuniziert. Bei der Anordnung mit zylindrischen Dichtflächen ist es zweckmäßig, zwischen den Dichtflächen einen radialen Dichtring anzuordnen, dieser kann in einer Nut der zylindrischen Dichtfläche des Deckels oder im Gehäuse angeordnet werden. An der Stirnseite des Gehäuses sind umfangsseitig zur Außenseite hin Befestigungskonturen angebracht, die formschlüssige Befestigungspunkte zu einem am Deckel angebrachten Befestigungselement bilden. Diese Befestigungskonturen an der Gehäuseseite können nockenartige Auskragungen oder Stege sein, die in segmentweisen Abschnitten im Bereich der Stirnseite des Gehäuses angeordnet sind.

An der Stirnseite des Deckels ist ein Befestigungselement beweglich aufgenommen, welches in einem geschlossenen Zustand eine Verriegelung zwischen Deckel und Gehäuse herstellt. Das Befestigungselement ist der Planfläche des Deckels gegenüber schwenkbar aufgenommen und kann in einem heruntergeklappten Zustand, in welchem es zur Planfläche des Deckels gegenüber annähernd parallel ist, auf dem Deckel verschoben werden.

Zur schwenkbaren Aufnahme des Befestigungselementes auf dem Deckel sind an der Planfläche des Deckels rippenartige Lagerstege angebracht, welche eine Achse aufnehmen und somit als Scharnier für das Befestigungselement dienen. Das Befestigungselement selbst besteht aus wenigstens einem Bügel, der auf einer Seite schwenkbar im Scharnier des Deckels gelagert ist. Gegenüber der Scharnierseite sind am Bügel Klauen angebracht, die in abgeschwenktem Zustand die Umfangsflächen des Deckels überragen und - durch ein Verschieben im Scharnier - die Befestigungskontur des Gehäuses übergreifen und somit eine Verriegelung zwischen Deckel und Gehäuse herstellen. Die Verschiebbarkeit des Bügels auf dem Deckel ist somit nur in abgeschwenktem Zustand möglich und kann dadurch gewährleistet werden, dass der Befestigungsbügel an der Verbindung zum Scharnier Langlöcher aufweist.

Der Deckel dient außer zum dichtenden Verschluss des Gehäuses, oftmals auch zur Befestigung eines im Filtergehäuse angeordneten Filterelements, wobei dieses in der Regel durch den Deckel eine axiale Fixierung erfährt. Somit muss der Deckel auch einen axialen Druck, welcher durch das Filterelement entsteht, zurückhalten. Dadurch sind die Klauen, welche die Befestigungskontur übergreifen, auf die mögliche Spannungsbelastung des Deckels abzustimmen.

Um eine größere Stabilität zu erreichen, greifen die Klauen segmentweise sowohl über die Befestigungskontur des Gehäuses, als auch über eine stirnseitige Aussenkante. Um zwischen Deckel und der Stirnseite des Gehäuses eine axiale Spannkraft zu erzeugen, können am Deckel und an der Stirnseite des Gehäuses trapezförmige, umlaufende Stege angeordnet werden. Der Querschnitt der trapezförmigen Stege kann dergestalt keilförmig ausgebildet sein, dass sich durch das Einschieben der Klaue über die Keilform eine Anpresskraft ergibt. Zum Verschluss des Deckels wird dieser nach Einbau des Filterelementes in das Gehäuse auf die kommunizierende Kontur des Gehäuses gebracht und in seine dichtende Position gedrückt. Eine Teilfixierung des Deckels kann auch dadurch erfolgen, dass am Gehäuse Halteklauen angeordnet sind, in die der Deckel über eine Kante an seiner Stirnseite eingeschwenkt werden kann. In diesem Fall wird das Befestigungselement gegenüber den festen Halteklauen des Gehäuses angeordnet.

Nach dem Einschwenken des Deckels in die kommunizierende Kontur des Gehäuses, wird der Deckel durch das Verschieben des Befestigungselements mit dem Gehäuse verriegelt.

Zur Abnahme des Deckels wird das Befestigungselement aus der verriegelten Position ausgeschoben und senkrecht zur Stirnseite des Deckels hoch geschwenkt. Zur Abnahme des Deckels kann das Befestigungselement als Haltegriff dienen, mit welchem der Deckel aus dem Gehäuse abgezogen werden kann. Als Material kommt sowohl für den Deckel als auch für das Gehäuse und die beweglichen Zusatzteile sowohl ein Aluminiumdruckguss oder Magnesiumdruckguss als auch Kunststoffe wie z.B. faserverstärktes Polyamid, Polyethylen, Polybutyl, Polypropylen oder Acrylnitril-Butadien-Styrol in Frage.

Die Erfindung ermöglicht es, den Deckelverschluss in einem stark eingeschränkten Einbauraum einzubringen. Durch die einfache Handhabung bei der Verriegelung des Verschlusses wird der Montageaufwand deutlich minimiert, wobei hier gänzlich auf Werkzeuge verzichtet werden kann. Durch die Nutzung des Befestigungselementes als Auszugsgriff kann die Handkraft beim Demontieren des Deckels ideal übertragen werden, dies ist insbesondere von Vorteil, wenn der Deckel nach längeren Wartungsintervallen des Filters im Gehäuse festsitzt.

Eine vorteilhafte Ausgestaltung der Erfindung gibt sich durch die Anordnung von radialen oder axialen Dichtungen zwischen den kommunizierenden Bereich des Deckels mit dem Gehäuse. Am Deckel sind hier üblicherweise an der zylindrischen Seite zum Gehäuse hin ein oder mehrere Nuten angebracht, wobei in den Nuten Radialdichtringe integriert sind. Die Anordnung der Radialdichtringe ist jedoch auch an den inneren Umfangsflächen des Gehäuses möglich. Ebenso ist es möglich, an den Stirnseiten zwischen Deckel und Gehäuse eine Axialdichtung anzubringen oder sowohl Axial- als auch Radialdichtringe anzuordnen. Durch die Anordnung von mehreren Dichtungen bzw. der Abstimmung des Dichtkonzeptes kann die Dichtheit vorteilhaft auch bei höherem Differenzdruck gewährleistet werden. Weiterhin wird durch eine Axialdichtung der Schmutzeintrag in den Dichtbereich - auch bei Wartungsarbeiten - minimiert.

Eine weitere vorteilhafte Ausgestaltung der Erfindung ermöglicht sich durch die Anordnung der Befestigungskontur am Gehäuse in Form eines radialen Steges im Bereich der Stirnseite des Gehäuses. Dieser Steg wird im Wesentlichen als ein trapezförmiger Steg ausgebildet, der das Gehäuse gleichförmig umschließt. In geschlossenem, verriegeltem Zustand wird der Steg von den Klauen des Befestigungselementes umklammert. Der Steg kann auch einen Hinterschnitt aufweisen und dadurch eine Einschnappung der Klauen ermöglichen. Der radiale Steg des Gehäuses ermöglicht in vorteilhafter Weise ein großflächiges, segmentartiges Eingreifen der Klauen des Befestigungselementes und erhöht dadurch die Befestigungskraft zwischen Gehäuse und Deckel. Wird der Wulst bzw. der Steg umlaufend ausgeführt, so kann der Deckel in beliebig verdrehter Position auf dem Gehäuse positioniert werden, was einen weiteren Vorteil hinsichtlich der Montage des Deckels ermöglicht.

Eine weitere vorteilhafte Ausgestaltungsmöglichkeit der Erfindung besteht in der Fixierung der Schiebepositionen des Befestigungselementes. Der im Gehäuse aufgenommene und durch die Befestigungselemente verriegelte Deckel ist im Betriebszustand Erschütterungen und Schwingbelastungen ausgesetzt, deshalb muss verhindert werden, dass sich das Befestigungselement selbständig aus seiner Verschiebeposition bewegt. Eine Rastverbindung ist hier über Langlöcher möglich, die am Befestigungsbügel des Befestigungselementes angebracht sind und in einer Achse des Scharniers aufgenommen sind. Durch diese Rastkontur an den Langlöchern kann der Befestigungsbügel an verschiedenen Rastpositionen fixiert werden. Selbstverständlich ist es auch möglich, die Achse an dem Befestigungsbügel zu befestigen und die Langlöcher an den Stegen des Deckels zu integrieren.

Selbstverständlich kann die Sicherung der Verschiebeposition auch durch zusätzlich angebrachte Bauteile wie Federn oder Sicherungsbolzen gewährleistet werden. Vorteilhaft bei der Fixierung des Befestigungselementes über eine Rastverbindung ist, dass keine zusätzlichen Bauteile benötigt werden. Des Weiteren sind keinerlei Werkzeuge für die Fixierung notwendig und die Handhabung wird selbst an schwer zugänglichen Stellen gewährleistet.

Gemäß einer weiteren vorteilhaften Ausführungsform der Erfindung wird der Deckel durch mehrere auf dem Deckel angeordnete Befestigungselemente, welche symmetrisch zueinander angeordnet sind, auf dem Gehäuse befestigt. Grundsätzlich lässt sich bei der Anordnung von mehreren Befestigungselementen der Umfangsbereich der Verbindung größer umschließen, wobei bereits durch zwei Befestigungselemente eine vollständige Umschließung gewährleistet werden kann. Es ist jedoch auch die Anordnung von vier oder mehr Befestigungselementen möglich, wobei sich der Verschiebeweg des Befestigungselementes bei gleicher Umschließung des Deckels reduzieren lässt.

Vorteilhaft bei einer symmetrischen Anordnung der Befestigungselemente ist, dass die Befestigungselemente genau gegenüberliegend angeordnet sind und die Befestigungsbügel, welche die Verbindung zwischen Deckel und Befestigungselement herstellen, in einer Linie angeordnet sind, somit können die Scharniere, welche die Schwenk- und Schiebelagerung der Befestigungselemente ermöglichen, von den jeweils gegenüberliegenden Befestigungselementen gemeinsam genutzt werden. Dadurch wird es möglich, durch eine Achse mehrere Befestigungsbügel, die parallel versetzt angeordnet sind, zu lagern.

In einer vorteilhaften Ausgestaltung sind die Befestigungselemente als halbkreisförmige Segmente ausgebildet und überdecken den Deckel in heruntergeklapptem Zustand vollständig. Die als Halbkreis ausgebildeten Befestigungselemente werden hier ebenso über Befestigungsbügel aufgenommen und mit dem Deckel schwenkbar verbunden, wobei der Befestigungsbügel in dieser Gestaltung von dem flächigen Befestigungselement überdeckt wird.

In der entriegelten Position sind die Befestigungselemente in einem Langlochscharnier nach außen geschoben und können somit über einen Bewegungswinkel von ca. 90 Grad nach oben geklappt werden und als Auszugsgriffe dienen. Die Überklammerung der Befestigungskontur durch die Klauen des Befestigungselementes kann auch hier am vollständigen Umfang erfolgen. Um den Verschiebeweg des Befestigungselementes über den Klammerbereich zu reduzieren, wird auf eine Umklammerung durch die Klauen an den Eckbereichen der halbkreisförmigen Befestigungselemente verzichtet

Deckel und Befestigungsbügel sind vorzugsweise einstückig angeordnet, dadurch wird der Deckel und auch die Verbindung zwischen den Klauen und den Befestigungsbügeln in sich stabilisiert. Weitere Vorteile ergeben sich durch die vollständige Überdeckung des Gehäusedeckels bei heruntergeklappten Befestigungselementen, wodurch der Deckel vor Schmutz und mechanischer Beschädigung geschützt ist und durch eine glatte Oberfläche wenig Ablagerungsmöglichkeiten für Schmutz und Öl bildet.

Eine weitere zweckmäßige Ausführung der Erfindung bietet sich durch die Anordnung von mehreren Befestigungsbügeln zur Verbindung des Befestigungselementes mit dem Deckel. Die Befestigungsbügel stellen nicht nur die schwenkbare und verschiebbare Lagerung zum Scharnier des Deckels dar, sondern stabilisieren auch die Verbindung zu den Klauen, insbesondere wenn sie rippenförmig gestaltet sind und mit einer flächigen Oberfläche des Befestigungselementes einteilig angespritzt sind. In vorteilhafter Weise wird auch die Belastung durch Kraftmomente auf die einzelnen Befestigungsbügel minimiert.

Das erfindungsgemäße Verfahren zum Befestigen und Lösen eines Deckels auf dem Gehäuse einer Filtervorrichtung gemäß Anspruch 1 ermöglicht es, den Deckel durch einfache Handhabung ohne Einsatz von Werkzeugen auf dem Filtergehäuse zu befestigen und zu lösen. Zum Befestigen wird der Deckel in hochgeklapptem Zustand, in welchem die Befestigungselemente ca. 90 Grad zur Stirnseite des Deckels geschwenkt sind, von Hand gegriffen und kann auf dem Gehäuse positioniert werden. Der Deckel wird auf die kommunizierende Kontur des Gehäuses aufgebracht, eingedrückt und findet in der Kontur des Gehäuses seine Aufnahme. Anschließend werden die Befestigungsbügel im Wesentlichen parallel zur Stirnseite des Deckels abgeschwenkt und können nach innen verschoben werden. Beim Verschieben der Befestigungselemente nach innen, übergreift die klauenförmige Kontur eine Befestigungskontur, die im Bereich der Stirnseite des Gehäuses angeordnet ist. Hierdurch wird das Befestigungselement formschlüssig mit dem Gehäuse verriegelt. Die übergreifende axiale Breite der Klauen ist sowohl mit der Befestigungskontur des Gehäuses als auch mit dem Deckel abgestimmt, so dass bei fehlerhafter Positionierung des Deckels auf dem Gehäuse keine Verriegelung stattfinden kann.

Dies schließt in vorteilhafter Weise aus, dass eine fehlerhafte Positionierung auf Grund schlechter Zugänglichkeit oder Schmutz zwischen Deckel und Gehäuse entsteht.

Da der Deckel auf dem Filtergehäuse oft die Zusatzfunktion der Fixierung eines Filterelementes im Filtergehäuse wahrnimmt, kann es bei falsch montiertem Filterelement auch zur Fehlpositionierung des Deckels führen, was eine Undichtigkeit zwischen Gehäuse und Deckel zur Folge hat. Auch diese Fehlermöglichkeit wird bei der erfindungsgemäßen Filtervorrichtung ausgeschlossen.

Zur Demontage des Deckels werden die Befestigungselemente nach außen verschoben, wodurch die formschlüssige Verbindung zwischen Deckel und Gehäuse entriegelt wird und wonach die Befestigungselemente wieder nach oben geschwenkt werden können und somit als Auszugsgriff des Deckels dienen. In vorteilhafter Weise wird hier die Doppelfunktion der Befestigungselemente sowohl zur formschlüssigen Verbindung als auch zur einfachen Handhabung genutzt.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: die erfindungsgemäße Filtervorrichtung mit verriegeltem Deckel in perspektivischer Darstellung,
- Figur 2: die Filtervorrichtung entsprechend Figur 1 mit geöffneten und geschwenkten Deckel, der Figur 1 entsprechende Bauteile sind mit gleichen Bezugszeichen versehen,
- Figur 3: eine Schnittdarstellung des Filtergehäuses mit verriegeltem Deckel, gleiche Bauteile der vorhergehenden Figuren sind mit gleichen Bezugszeichen versehen sind,
- Figur 4: Eine Filtervorrichtung im Vollschnitt mit entriegeltem Deckel, gleiche Bauteile der vorhergehenden Figuren sind mit gleichen Bezugszeichen versehen sind.

### Beschreibung der Ausführungsbeispiele

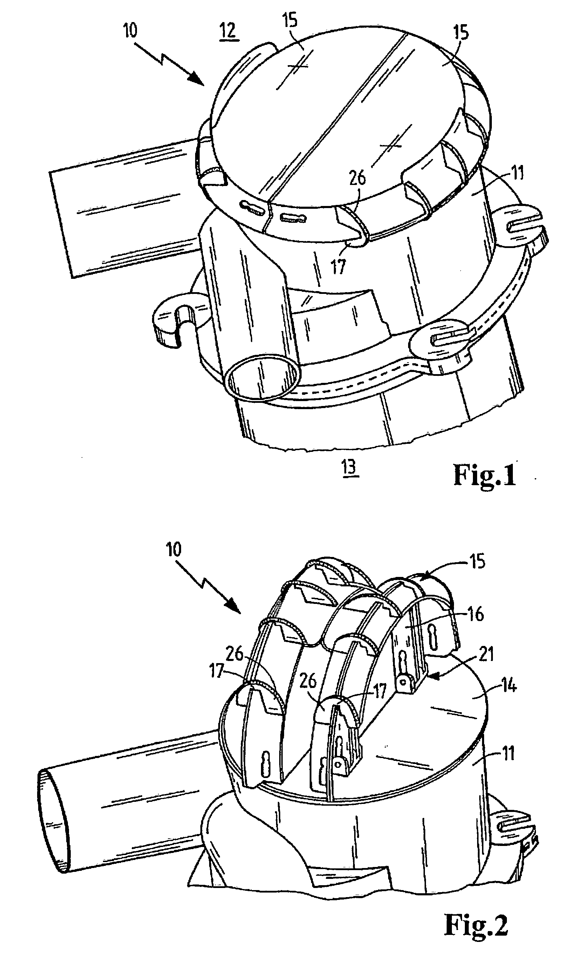

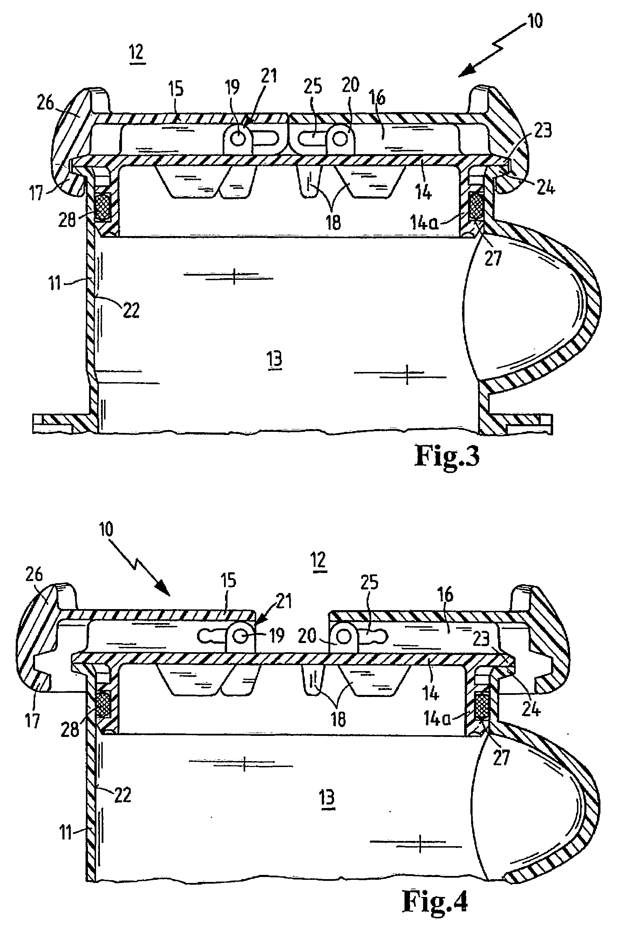

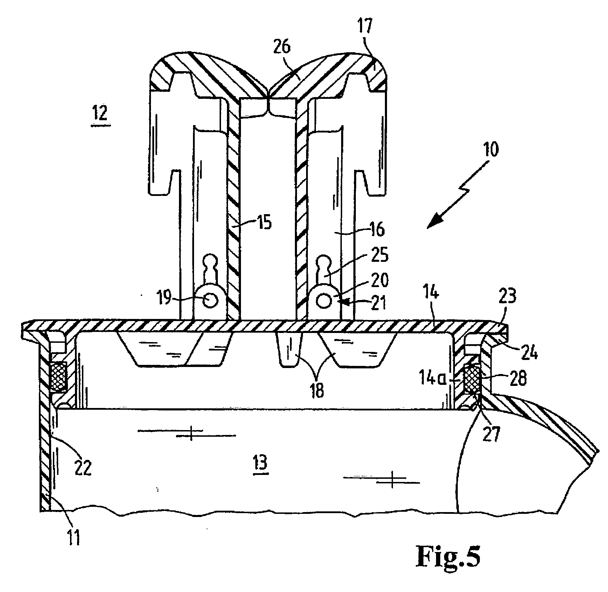

In Figur 1 ist die erfindungsgemäße Filtervorrichtung 10 in perspektivischer Darstellung gezeigt. Das ausschnittsweise gezeigte Gehäuse 11 ist durch den unterhalb der Befestigungselemente 15 liegenden, in Figur 2 sichtbaren Deckel 14 verschlossen. Die Befestigungselemente 15 sind in diesem Ausführungsbeispiel als zwei Halbschalen gestaltet und überdecken den Deckel 14 vollständig. An den Umfangsseiten der Befestigungselemente 15 sind Klauen 17 angebracht, welche einen in Figur 3 dargestellten umlaufenden Steg des Gehäuses 24, so wie den Außenumfang des verdeckten Deckels 14 umschließen. Dadurch wird die Außenseite 12 zur Gehäuseseite 13 hin verschlossen.

Figur 2 zeigt die Filtervorrichtung 10, wobei der Deckel 14 in die kommunizierende Kontur des Gehäuses 11 eingebracht ist und das Befestigungselement 15 nach oben geschwenkt ist und somit als Handgriff zum Auszug des Deckels 14 dient. Das Befestigungselement 15 ist mit dem Befestigungsbügel 16 einstückig hergestellt. Durch die Schamierverbindung 21 ist der Befestigungsbügel 16 mit dem Deckel 14 schwenkbar und verschiebbar gelagert. Die Kontur der Klauen 17, welche in verschlossenen Zustand eine Verriegelung mit dem Gehäuse herstellen, ist am hochgeklappten Befestigungselement 15 sichtbar. Zur Stabilisierung der Klauen 17 sind am Befestigungselement 15 umfangsseitig Rippen 26 angebracht

Figur 3 zeigt die Filtervorrichtung 10 im Vollschnitt. Der Deckelabsatz 14a ist in die zylindrische Fläche 22 des Gehäuses 11 eingeschoben. Zur Bildung eines Scharniers sind am Deckel 14 Lagerstege 20 angeordnet, die einen Achsbolzen 19 fixieren. Der Achsbolzen 19 dient in Verbindung mit dem Befestigungsbügel 16 zur Aufnahme des Befestigungselementes 15. Am Befestigungsbügel 16 sind Langlöcher mit Rastung 25 angebracht, welche in der Schamierverbindung 21 aufgenommen sind und in der Längsachse des Langloches 25 verschiebbar sind, wobei an der äußeren Endstellung ein Schwenken des Befestigungselementes 15 nach oben möglich ist. Die Klauen 17 am umfangsseitigen äußeren Rand des Befestigungselementes 15 umschließen einen umlaufenden Steg 24 des Gehäuses 11, wie auch einen umlaufenden Steg des Deckels 23 und bewirken somit eine formschlüssige Verriegelung zwischen Deckel 14 und Gehäuse 11, wobei in diesem gezeigten Beispiel durch die keilförmige Ausführung der Klauen 17 eine axiale Anpresskraft zwischen Deckel 14 und Gehäuse 11 erreicht werden kann. Die am Deckel 14 auf der Gehäuseseite 13 angebrachten Nocken 18 haben die Funktion, ein nicht dargestelltes Filterelement axial und radial im Gehäuse zu sichern.

In Figur 4 ist das Befestigungselement 15 im Langloch 25 nach außen geschoben, wodurch sich die, durch die Klauen 17 verursachte Verriegelung zwischen Gehäuse 11 und Deckel 14 löst. Die im Langloch 25 sichtbare Rastung bewirkt eine Sicherungskraft, welche beim Verschieben des Befestigungselementes 15 überwunden werden muss. Im Deckelabsatz 14a ist eine Nut 27 angeordnet, welche einen Radialdichtring 28 aufnimmt, wobei dieser Radialdichtring 28 eine dichte Verbindung zwischen der zylindrischen Fläche 22 und dem Deckel 14 herstellt.

## Patentansprüche

1. Filtervorrichtung (10), aufweisend ein Gehäuse (11) in welchem das Filtermedium aufgenommen ist, einen Deckel (14) welcher das Gehäuse (11) dichtend verschließt, wobei der Deckel (14) durch wenigstens ein Befestigungselement (15) an einer Stirnseite des Gehäuses (11) befestigt ist und zwischen Deckel (14) und Gehäuse eine Dichtung angeordnet ist, wobei an den außen liegenden Umfangsflächen des Gehäuses im Bereich der Stirnseite Befestigungskonturen (24) angeordnet sind **dadurch gekennzeichnet, dass** auf der außenliegenden Stirnseite des Deckels (14) ein Befestigungselement (15) schwenkbar angeordnet ist und das Befestigungselement (15) im Wesentlichen parallel zur Stirnseite des Deckels (14) verschiebbar angeordnet ist, wobei das Befestigungselement (15) in geschlossenem Zustand eine formschlüssige Verbindung zwischen Deckel (14) und Gehäuse (11) herstellt und in einem geöffneten und geschwenkten Zustand einen Griff zur Handhabung des Deckels (14) bildet.

2. Filtervorrichtung nach Anspruch 1, **dadurch gekennzeichnet, dass** zwischen Gehäuse (11) und Deckel (14) eine radiale und / oder eine axiale Dichtung (28) angeordnet ist.

3. Filtervorrichtung nach einem der vorhergehenden Ansprüche, **dadurch gekennzeichnet, dass** die Befestigungskontur (24) am Gehäuse (11) durch eine im Bereich der Stirnseite des Gehäuses (11) liegende Radialnut oder einen radialen Wulst gebildet wird

4. Filtervorrichtung nach einem der vorhergehenden Ansprüche, **dadurch gekennzeichnet, dass** das Befestigungselement (15) eine Befestigungskontur (24) in wenigstens einem Umfangssegment übergreift.

5. Filtervorrichtung nach einem der vorhergehenden Ansprüche, **dadurch gekennzeichnet, dass** die Verschiebung des Befestigungselementes (15) im verriegelten Zustand durch eine rastende Verbindung zwischen Befestigungselement (15) und Deckel (14) gesichert ist.

6. Filtervorrichtung nach einem der vorhergehenden Ansprüche, **dadurch gekennzeichnet, dass** auf dem Deckel (14) mehrere Befestigungselemente (15) symmetrisch zueinander angeordnet sind.

7. Filtervorrichtung nach einem der vorhergehenden Ansprüche, **dadurch gekennzeichnet, dass** die Befestigungselemente (15) schalenförmig ausgebildet sind und den Deckel (14) in geschlossenem Zustand im Wesentlichen flächig überdecken.

8. Filtervorrichtung nach einem der vorhergehenden Ansprüche, **dadurch gekennzeichnet, dass** jeweils ein Befestigungselement (15) durch wenigstens zwei Befestigungsbügel (18) mit dem Deckel (14) verbunden ist.

9. Verfahren zum Befestigen und Lösen eines Deckels (14) auf dem Gehäuse (11) einer Filtervorrichtung (10) gemäß Anspruch 1, wobei der Deckel (14) durch einen senkrecht zur Stirnseite des Deckels (14) geschwenkten Handgriff gefasst und auf das Gehäuse (11) gedrückt wird und dabei eine Aufnahme im Gehäuses (11) findet, **dadurch gekennzeichnet, dass** der Handgriff annähernd parallel zur Stirnseite geschwenkt wird, wobei der Handgriff in einem abgeschwenkten Zustand als Befestigungselement (15) dient, wobei das Befestigungselement (15) durch ein Verschieben zur Innenseite des Deckels (14) hin über eine Befestigungskontur (24) des Gehäuses (11) greift und den Deckel (14) auf dem Gehäuse (11) formschlüssig verriegelt, wobei das Befestigungselement (15) zum Lösen des Deckels (14) zur Außenseite (12) des Gehäuses (11) verschoben wird, wodurch sich die Verriegelung zwischen Gehäuse (11) und Deckel (14) löst, wonach das Befestigungselement (15) senkrecht zur Stirnseite geschwenkt wird und einen Griff bildet, an welchem der Deckel (14) aus dem Gehäuse (11) ausgezogen wird.

## Claims

1. Filter device (10), including a housing (11) in which the filtering medium is accommodated, a cover (14) which closes the housing (11) in a sealing manner, wherein the cover (14) is secured by means of at least one fastening element (15) at an end face of the housing (11) and a seal is disposed between cover (14) and housing, wherein fastening contours (24) are disposed at the outside circumferential faces of the housing in the region of the end face, **characterised in that** a fastening element (15) is pivotally disposed on the outside end face of the cover (14) and the fastening element (15) is disposed so as to be displaceable substantially parallel to the end face of the cover (14), wherein the fastening element (15) in the closed state produces a positive locking connection between cover (14) and housing (11) and in an open, pivoted state forms a handle so that the cover (14) can be handled.

2. Filter device according to claim 1, **characterised in that** a radial and/or axial seal (28) is disposed between housing (11) and cover (14).

3. Filter device according to one of the preceding claims, **characterised in that** the fastening contour (24) on the housing (11) is formed by a radial groove or a radial bead located in the region of the end face of the housing (11).

4. Filter device according to one of the preceding claims, **characterised in that** the fastening element (15) engages over a fastening contour (24) in at least one circumferential segment.

5. Filter device according to one of the preceding claims, **characterised in that** displacement of the fastening element (15) in the locked state is prevented by a locking connection between fastening element (15) and cover (14).

6. Filter device according to one of the preceding claims, **characterised in that** a plurality of fastening elements (15) are disposed in a symmetrical manner one relative to the other on the cover (14).

7. Filter device according to one of the preceding claims, **characterised in that** the fastening elements (15) are shell-shaped and overlap the cover (14) in the closed state in a substantially planar manner.

8. Filter device according to one of the preceding claims, **characterised in that**, in each case, one fastening element (15) is connected to the cover (14) by means of at least two fastening brackets (18).

9. Method for fastening and unlocking a cover (14) on the housing (11) of a filter device (10) in accordance with claim 1, wherein the cover (14) is gripped by using a handle that has been pivoted perpendicularly relative to the end face of the cover (14), and is pressed onto the housing (11) and, in so doing, finds accommodation in the housing (11), **characterised in that** the handle is pivoted almost parallel to the end face, wherein the handle, in a pivoted state, serves as fastening element (15), wherein the fastening element (15), by means of a displacement towards the inside of the cover (14), engages over a fastening contour (24) of the housing (11) and locks the cover (14) on the housing in a positive locking manner, wherein, to unlock the cover (15), the fastening element (15) is displaced towards the outside (12) of the housing (11), thereby unlocking the locking arrangement between housing (11) and cover (14), the fastening element (15) then being pivoted perpendicularly towards the end face and forming a handle, by means of which the cover (14) is pulled away from the housing (11).

## Revendications

1. Dispositif de filtre (10) comportant un boîtier (11) recevant un milieu filtrant et un couvercle (14) fermant le boîtier (11) de manière étanche, le couvercle (14) étant fixé à une face frontale du boîtier (11) par au moins un élément de fixation (15) et un joint est interposé entre le couvercle (14) du boîtier, et les surfaces périphériques extérieures du boîtier présentent des contours de fixation (24) dans la région de la face frontale,
**caractérisé en ce que**
la face frontale extérieure du couvercle (14) porte de façon pivotante un élément de fixation (15) monté coulissant pratiquement de façon parallèle à la face frontale du couvercle (14),
l'élément de fixation (15) réalise en position fermée, une liaison par la forme entre le couvercle (14) et le boîtier (11) et forme en position ouverte et en position basculée, une poignée pour manoeuvrer le couvercle (14).

2. Dispositif de filtre selon la revendication 1,
**caractérisé par**
un joint radial et/ou axial (28) installé entre le boîtier (11) et le couvercle (14).

3. Dispositif de filtre selon l'une des revendications précédentes,
**caractérisé en ce que**
le contour de fixation (24) du boîtier (11) est formé par une rainure radiale ou un bourrelet radial dans la région de la face frontale du boîtier (11).

4. Dispositif de filtre selon l'une des revendications précédentes,
**caractérisé en ce que**
l'élément de fixation (15) chevauche un contour de fixation (24) au moins sur un segment périphérique.

5. Dispositif de filtre selon l'une des revendications précédentes,
**caractérisé en ce que**
le coulissement de l'élément de fixation (15) à l'état verrouillé est assuré par une liaison d'enclipsage entre l'élément de fixation (15) et le couvercle (14).

6. Dispositif de filtre selon l'une des revendications précédentes,
**caractérisé en ce que**
plusieurs éléments de fixation (15) sont installés de manière symétrique les uns par rapport aux autres sur le couvercle (14).

7. Dispositif de filtre selon l'une des revendications précédentes,
**caractérisé en ce que**
les éléments de fixation (15) ont une forme de coupelle et ils chevauchent pratiquement à plat le couvercle (14) en position fermée.

8. Dispositif de filtre selon l'une des revendications précédentes,
**caractérisé en ce qu'**
un élément de fixation respectif (15) est relié au couvercle (14) par au moins deux arceaux de fixation (18).

9. Procédé de fixation et d'enlèvement du couvercle (14) d'un boîtier (11) d'un dispositif de filtre (10) selon la revendication 1, selon lequel
le couvercle (14) se prend par une poignée pivotée perpendiculairement à la face frontale du couvercle (14) pour être pressé contre le boîtier (11) et se loger ainsi dans le boîtier (11),
**caractérisé en ce que**
la poignée se bascule pratiquement parallèlement à la face frontale,
à l'état dégagé par basculement, la poignée, sert d'élément de fixation (15),
par coulissement vers le côté intérieur du couvercle (14), l'élément de fixation (15), vient prendre par-dessus le contour de fixation (24) du boîtier (11) et verrouille le couvercle (14) sur le boîtier (11) par une liaison par la forme,
l'élément de fixation (15) est coulissé vers le côté extérieur (12) du boîtier (11) pour détacher le couvercle (14), libérant ainsi le verrouillage entre le boîtier (11) et le couvercle (14), et ensuite l'élément de fixation (15) est basculé perpendiculairement à la face frontale et forme une poignée pour laquelle le couvercle (14) peut être dégagé du boîtier (11).
